# EUROPEAN PATENT APPLICATION

(11) **EP 1 813 455 A2**
(43) Date of publication of application: **01.08.2007**
(21) Application number: 07101041.7
(22) Date of filing: 23.01.2007
(51) Int. Cl.: B60J 5/04, B60R 3/02

(54) **Vehicle with an entrance aid**

(30) Priority: 26.01.2006 GB 0601557
(71) Applicant: W.H.ASPECT LIMITED, Southport Merseyside PR8 6LU (GB)
(72) Inventor: Samuels, Howard Daniel, Southport, Merseyside, PR8 6LU. (GB); Healy, Brian Reginald, Southport, Merseyside, PR8 6LU. (GB)
(74) Representative: Manley, Nicholas Michael

(57) **Abstract**

The present invention relates to a vehicle comprising a vehicle body, a vehicle door (12) releasably locatable in an access aperture of the vehicle body, a platform (14) forming at least part of the interior floor of the vehicle and being displaceably mounted on the vehicle body adjacent to the door, and means (22,24) for displacing the platform outwardly and inwardly with respect to the vehicle body through the access aperture when the door is open.

## Description

The present invention relates to a vehicles and methods of modifying vehicles so as to afford better access to the side of a vehicle. The present invention is particularly useful for access to and from the vehicle from wheelchairs and for the loading of heavy and/or wheeled articles.

Standard cars can be modified after production in order to accommodate people with mobility problems who are wheelchair bound. This modification is necessary as the design of most cars is aimed towards fully mobile people rather than disabled drivers or passengers.

Most types of cars that are modified for wheelchair users tend to be the larger cars such as multipurpose vehicles (MPV) and estate cars. These larger cars are often preferred due to the larger doors and interior space which is necessary for accommodating a wheelchair and/or permitting a person to remain seated in a wheelchair whilst being transported. It will be evident that certain conditions would not permit a person to leave a wheelchair for fear of making their condition worse or causing problems in moving the person from the wheelchair onto a passenger or driver's seat. One common modification on the MPV type of car is to have a ramp which folds down from the rear of the car when the boot is open and to have a number of seats removed so that a wheelchair can be wheeled directly into the vehicle and placed either in a passenger position or indeed in a driving position. Whilst this modification has a number of advantages, it also requires a number of seats to be removed from the vehicle. Moreover, access is only gained from the rear and therefore the person in the wheelchair needs to be placed on a road and can not be wheeled directly into the vehicle from the pavement. Furthermore, the removal of a number of seats may not be appropriate if the disabled person is a member of a large family which necessitates a number of people to be transported at the same time. Indeed, if a person in a wheelchair is a driver or parent, it would be common for him or her to be seated at the front of the vehicle which would usually require the removal of at least one or two of the rear seats.

GB2009097 discloses an apparatus for mounting a wheelchair in a motor vehicle, comprising a support securable to the floor of a vehicle adjacent to a door opening in the body thereof, whereby a platform may be tilted and pivoted on the support. Such an apparatus requires multiple moving parts in addition to requiring a vehicle doorway to be sufficiently wide and high to allow a person in a wheelchair to gain entry to the interior of the vehicle. US 5,308,214 discloses a wheelchair lift apparatus that is removably coupled to the floor pan, which may be adapted for use in an existing motor vehicle in lieu of a seat structure. The lift apparatus includes a motor driven horizontal screw for laterally moving a platform across the vehicle to exit the rear passenger compartment through the side door opening. This apparatus also requires a number of complicated moving parts in addition to removal of the rear seats in order to accommodate the mechanism when not in use, if the rear passengers' foot space is not to be greatly reduced. Additionally, the arrangement requires a disabled person to manoeuvre himself or herself over onto the passenger/driver seat from the wheelchair itself which can often be a difficult and dangerous procedure.

It is therefore an object of the present invention to address one or more of the problems as hereinabove described. It is also an object of the present invention to provide a vehicle and/or method of modifying an existing vehicle so as to afford better access to the side of a vehicle for a disabled person and/or for loading of articles. Furthermore, it would be advantageous to provide a method of modifying a vehicle such that access can be gained from one or either side of the vehicle in addition to allowing most of the seats of the vehicle to remain intact thereby allowing a number of people to be carried in the same vehicle.

The present invention relates to a vehicle comprising a vehicle body, a vehicle door releasably locatable in an access aperture of the vehicle body, a platform forming at least part of the interior floor of the vehicle and being displaceably mounted on the vehicle body adjacent to the door, and means for displacing the platform outwardly and inwardly with respect to the vehicle body through the access aperture when the door is open.

This allows the platform to be displaced outwardly to a loading/unloading position as the door is opened and allows the platform to be displaced inwardly into a stowed position as the door is closed. The door may be attached to the platform.

In a further aspect of the present invention there is provided a vehicle comprising a vehicle body, a platform displaceably mounted on the vehicle body, a door attached to the platform, and means for displacing the platform with respect to the vehicle body between a first position in which the door is open with respect to the vehicle body and a second position in which the door is closed with respect to the vehicle body.

The present invention therefore provides for a vehicle that can easily load articles and/or persons into the interior in an expedient and efficient manner. It will be apparent to one skilled in the art that while the present invention is directed towards assisting access to a vehicle for a disabled person (when usually sitting on a wheelchair), the present invention could equally be used in order to load goods and products (such as those resting on a pallet) into the side of a vehicle such as a van. The door may also be attached to the platform or vehicle body solely. Alternatively, the door may be attached to both the platform and the vehicle body.

Preferably, the platform is slidably mounted on the vehicle body and further comprises a ramp in order to assist in the loading of the vehicle. The ramp may be pivotally mounted on the platform. The vehicle may also comprise a means for varying the inclination of the ramp with respect to the platform. Such a ramp may be connected to the platform in a number of configurations, and the ramp may be received in an aperture in the vehicle body, when the door is in the closed second position. The aperture may be located in the sill of the vehicle and should the platform be connected to the front door of the vehicle, the aperture may be in the vehicle body underneath the rear door on that particular side. Alternatively, the ramp may be stowed away under the vehicle body when the door is closed for example. It is also preferred that the ramp is capable of contacting the ground surrounding the vehicle so that a wheelchair can simply be "wheeled" onto the platform with minimum amount of fuss. The ramp may also be deployed during and/or after the movement of the platform from the second position to the first position (when the door is open). The ramp may therefore be capable of being deployed at a number of angles and the angle may be determined by the difference between the platform and the ground surrounding the vehicle. Such an angle may be in a range of 5-30°, but preferably in a range between 8-20°.

The base of the door may be attached to the edge of the platform. The door may in turn be attached to the edge of the platform by a number of means and additional supporting struts/members may also be attached to the platform/door to the body of the vehicle and these may in turn also assist in the movement of the door from the first open position to the second closed position. The means for displacing the platform may comprise an electric motor or hydraulics. Furthermore, the actuation of the platform may be controllable remotely (such as by means of a remote control fob or similar device).

In order to secure a wheelchair (or indeed any other article) to the platform, the platform preferably comprises retaining means for releasably holding a wheelchair or article. A number of retaining means may be used to hold the wheelchair to the platform, such as by means of a harness or similar device. The present invention may also incorporate a number of additional holding means that can be used to hold a wheelchair in place within the body of a vehicle during transportation.

Potentially, any vehicle door may be attached to the platform, although a front door is preferred. When the door is in the closed position, the door may be held to the vehicle by a locking means. Such a locking means may comprise a "soft closed locking mechanism" which is often found in luxury vehicles, whereby a door is pushed onto a spring loaded latch and an electric motor engages a lock (which may in turn be an extension of the latch itself) after the door is on the latch, so as to prevent a car door from being "slammed shut".

In order to accommodate the platform, the vehicle body may comprise a floor plan and the floor pan may be shaped to receive the platform when it is in the second position (with the door in a closed position). The platform may also be supported by one or more wheels when it is either fully displaced or at a position which is partially displaced from the vehicle body. The platform may move relative to the vehicle by a number of means, but will preferably move on runners or similar structures.

The door and/or vehicle may also have a continuous or substantially continuous weather strip disposed around the edge of the door when the door is in the second closed position. It will be apparent to one skilled in the art that additional weather strips may also be employed so as to ensure that the vehicle is water tight and to prevent ingress of water from a number of directions (due to vehicle movement etc.). The ramp may comprise two or more portions that extend telescopically (or the portions capable of riding over one another) when the door is moved to, or located in, the first (open) position. The platform may also form part of the interior floor of the vehicle when the door is in the second closed position.

If required, two doors from the same side of the vehicle may be attached to the platform and this may allow for multiple wheelchairs to gain entry into the vehicle itself. Should two doors from the same side of the vehicle be attached to the platform, a B-pillar and/or a structural member may be integrally formed or attached between the two doors so as to maintain the structural integrity of the vehicle when the doors are in the second closed position. Furthermore, the B-pillar and/or structural member may positively locate with the chassis or body of the vehicle when the doors are in the second closed position.

A B-pillar in the context of this invention should be taken to be a structural member which is disposed between the roof and the floor/sill of a vehicle frame and is commonly used as a member for mounting a rear door, housing a locking means and also used as an anchor point for a seat belt. Additionally, such a structural member is also used to provide structural rigidity for the chassis and the vehicle frame.

By way of example only, a specific embodiment of the present invention will now be described with reference to the accompanying drawings in which:
Fig. 1 is a perspective view of an embodiment of vehicle in accordance with the present invention, showing a door in a closed position; and
Fig. 2 is a perspective view of the vehicle shown in Fig. 1, with the door shown in an open position.

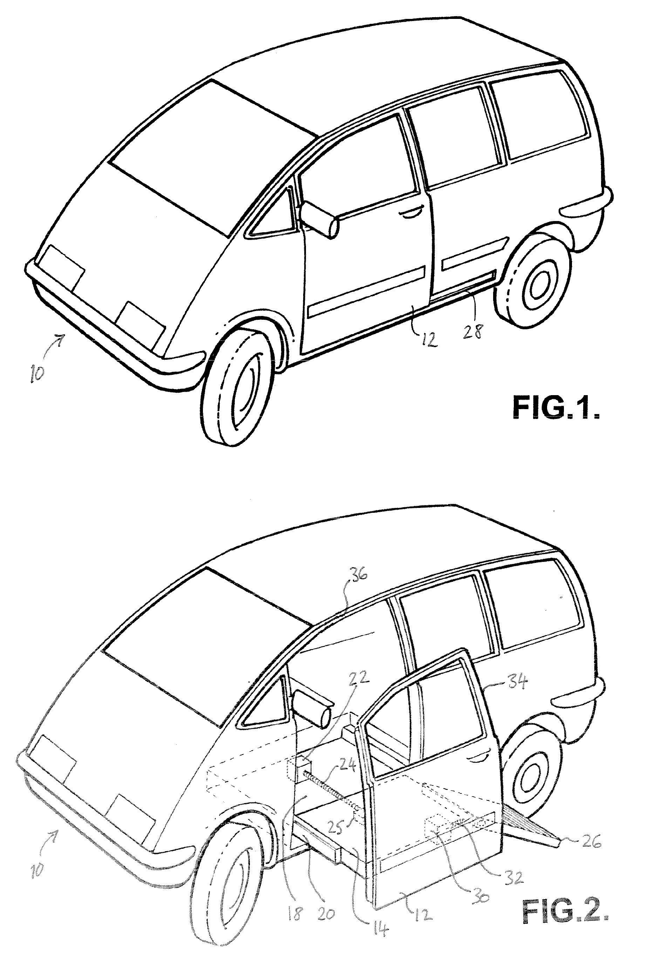

With reference to the drawings, a four-wheeled multipurpose passenger vehicle (MPV) 10 comprises a front passenger-side door 12 which is movable between a closed position illustrated in Fig. 1 and an open position illustrated in Fig. 2. As best seen in Fig. 2, the door 12 is mounted on the outer edge of a platform 14 which is movable laterally between the open and closed positions. When the platform 14 is displaced inwardly, it is received in a complementarily-shaped recess 18 formed in the floor pan of the vehicle.

The platform is mounted on runners 20, which allows the platform to slide between its open and closed positions. The platform is displaceable by means of an electric motor 22 which is arranged to rotate a screw-threadedly mounted rod 24 which in turn is threadly engaged with an internally threaded boss 25 on the undersurface of the platform 14. Rotation of the screw-threaded rod 24 in one direction displaces the platform 14 laterally outwardly and rotation of the rod in the opposite direction draws the platform laterally inwardly.

As best seen in Fig. 2, an access ramp 26 is pivotally mounted to the rear edge of the platform 14. The ramp 26 is pivotable between a downwardly-inclined access orientation (shown in Fig 2.) and a horizontal stowage orientation in which it may be received in a slot 28 provided in the sill of the vehicle rearwardly of the door 12. The ramp 26 may be pivoted between its extreme positions by means of a further electric motor 30 which is adapted to rotate a screw-threaded rod 32 which is threadedly engaged with an internally threaded boss (not illustrated) on the undersurface of the platform 14. Rotation of the screw-threaded rod in a first direction causes the ramp to pivot downwardly, and operation of the motor in the opposite direction causes the ramp to pivot upwardly.

In use, the door 12 is moved from the closed position shown in Fig. 1 to the open position shown in Fig. 2 by actuation of the first motor 22. Conveniently, operation of the motor can be controlled remotely. The platform 14 is also provided with a limit switch (not shown) which actuates the second, ramp-controlling motor 30 to pivot the ramp downwardly when the platform 14 is fully extended. When the ramp is pivoted into engagement with the ground a wheelchair can be wheeled onto the ramp 26 and thence onto the platform 14 or, alternatively, may be wheeled off the platform 14 and ramp 26 and onto the ground. Alternatively, the ramp 26 may be accommodated underneath the vehicle, or indeed extend telescopically from the underside of the platform 14.

The door 12 further has a weather strip 34 disposed around its periphery and, in addition, the doorway also has a weather strip 36 provided to ensure a water-tight fit of the door against the vehicle body when the door is in a closed position.

The platform 14 may in turn have a harness or similar device for releasably holding the wheelchair to the platform 14 when the vehicle is in motion, although such a harness or mechanism is not shown in the figures. When the door 12 assumes the "closed" position in the doorway of the vehicle, a "soft close mechanism" is used to bring the door 12 firmly to a "locked" position on the vehicle. Such a "soft close mechanism" therefore allows for the remote electronic locking and opening of the door as and when required (and this may further be coupled to a remote control device). If required, the platform 14 may be supported on the ground by means of wheels protruding from the underside of the platform 14 (not shown) and wheels can also be provided on the ramp 26 if appropriate.

It will also be apparent to one skilled in the art that a standard vehicle may also be modified so as to have a similar configuration as the vehicle as shown in Figs. 1 and 2. During modification, the door 12 is first removed from its mounting brackets and mounted on a platform 14 and the floor pan 18 lowered accordingly, so as to accommodate the platform and associated drive mechanism. Furthermore, slot 28 may be formed within the sill of the vehicle in order to accommodate the ramp 26 which is attached to the platform 14 and the deployment withdrawal mechanism for the platform may be adapted for the given vehicle. The locking devices can also be incorporated into the newly removed door 12 and can be integrated with the central locking device of the vehicle and/or a different remote control device provided for specific operation of a given door if required.

The invention is not restricted to the details of the forgoing embodiment.

## Claims

1. A vehicle comprising a vehicle body, a vehicle door releasably locatable in an access aperture of the vehicle body, a platform forming at least part of the interior floor of the vehicle and being displaceably mounted on the vehicle body adjacent to the door, and means for displacing the platform outwardly and inwardly with respect to the vehicle body through the access aperture when the door is open.

2. A vehicle as claimed in claim 1, wherein the door is attached to the platform.

3. A vehicle comprising a vehicle body, a platform displaceably mounted on the vehicle body, a door attached to the platform, and means for displacing the platform with respect to the vehicle body between a first position in which the door is open with respect to the vehicle body and a second position in which the door is closed with respect to the vehicle body.

4. A vehicle as claimed in any preceding claim, wherein the platform is slidably mounted on the vehicle body.

5. A vehicle as claimed in any preceding claim, wherein the platform further comprises a ramp.

6. A vehicle as claimed in claim 5, wherein the ramp is pivotally mounted on the platform.

7. A vehicle as claimed in claim 6, comprising means for varying the inclination of the ramp with respect to the platform.

8. A vehicle as claimed in any of claims 5 to 7, wherein the ramp is received in an aperture in the vehicle body when the door is closed.

9. A vehicle as claimed in any of claims 5 to 7, wherein the ramp is stowed under the vehicle body when the door is closed.

10. A vehicle as claimed in any preceding claim, wherein the ramp is capable of contacting the ground surrounding the vehicle.

11. A vehicle as claimed in claim any of claims 5 to 10, wherein the ramp is deployed during and/or after the movement of the platform.

12. A vehicle as claimed in any preceding claim, wherein the base of the door is attached to the outer edge of the platform distal from the vehicle.

13. A vehicle as claimed in any preceding claim, wherein the means for displacing the platform comprises an electric motor or hydraulic mechanism.

14. A vehicle as claimed in any preceding claim, wherein the actuation of the platform is controllable remotely.

15. A vehicle as claimed in any preceding claim, wherein the platform comprises retaining means for releasably holding a wheelchair.

16. A vehicle as claimed in claim 15, wherein the retaining means comprises a harness.

17. A vehicle as claimed in any preceding claim, wherein the door is a front door of the vehicle.

18. A vehicle as claimed in any preceding claim, wherein when the door is in the closed position, the door is held to the vehicle by a locking means.

19. A vehicle as claimed in claim 18, wherein the locking means comprises a soft close locking mechanism.

20. A vehicle as claimed in any preceding claim, wherein the vehicle body comprises a floor pan, the floor pan being shaped to receive the platform when the door is closed.

21. A vehicle as claimed in any preceding claim, wherein the platform is supported by one or more wheels when it is either fully displaced or at a position which is partially displaced from the vehicle body.

22. A vehicle as claimed in any preceding claim, wherein the platform moves on runners.

23. A vehicle as claimed in any preceding claim, wherein the door and/or vehicle has a continuous or substantially continuous weather strip adapted to be disposed around the edge of the door when the door is in a closed position.

24. A vehicle as claimed in any of claims 5 to 23, wherein the ramp comprises two or more portions that can extend telescopically when the door is moved to, or located in an open position.

25. A vehicle as claimed in any preceding claim, wherein the platform forms part of the interior floor of the vehicle when the door is in a closed position.

26. A vehicle as claimed in any preceding claim, wherein two doors from the same side of the vehicle are attached to the platform.

27. A vehicle as claimed in claim 26, wherein a B-pillar and/or a structural member is integrally formed or attached between the two doors so as to maintain the structural integrity of the vehicle when the door is in a closed position.

28. A vehicle as claimed in claim 25, wherein the B-pillar and/or structural member positively locates with the chassis of the vehicle when the doors are in a closed position.
